(19) Europäisches Patentamt
European Patent Office
Office européen des brevets

(11) **EP 2 432 129 B1**

(12) **FASCICULE DE BREVET EUROPEEN**

(45) Date de publication et mention
de la délivrance du brevet:
**16.11.2016 Bulletin 2016/46**

(51) Int Cl.:
***H04B 1/00*** *(2006.01)*      ***H04B 1/04*** *(2006.01)*

(21) Numéro de dépôt: **11181074.3**

(22) Date de dépôt: **13.09.2011**

(54) **Architecture de couplage multi-bande**

Architektur zur Mehrband-kupplung

Multiband coupling architecture

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.09.2010 FR 1057448**

(43) Date de publication de la demande:
**21.03.2012 Bulletin 2012/12**

(73) Titulaire: **STMicroelectronics (Tours) SAS
37100 Tours (FR)**

(72) Inventeurs:
- **Laporte, Claire
37000 TOURS (FR)**
- **Ezzeddine, Hilal
37100 TOURS (FR)**

(74) Mandataire: **de Beaumont, Michel
Cabinet Beaumont
1, rue Champollion
38000 Grenoble (FR)**

(56) Documents cités:
**WO-A1-00/46931**

## Description

<u>Domaine de l'invention</u>

La présente invention concerne de façon générale l'industrie électronique et, plus particulièrement, les systèmes d'émission-réception radiofréquence. L'invention concerne plus précisément un coupleur multi-bande.

<u>Exposé de l'art antérieur</u>

Un coupleur est généralement utilisé pour prélever une partie de la puissance présente sur une ligne de transmission, dite principale ou primaire, vers une autre ligne, dite couplée ou secondaire, située à proximité. Les coupleurs se répartissent en deux catégories selon qu'ils sont constitués de composants passifs discrets (on parle alors de coupleurs à éléments localisés) ou de lignes conductrices proches les unes des autres pour être couplées (on parle alors de coupleurs à lignes distribuées). L'invention concerne la deuxième catégorie de coupleurs. Les ports de la ligne principale sont généralement désignés IN (entrée) et OUT (sortie). Ceux de la ligne couplée sont généralement désignés CPLD (couplé) et ISO (isolé).

Dans de nombreuses applications, on a besoin de prélever une partie de la puissance transmise sur une ligne, par exemple, pour contrôler la puissance d'un amplificateur dans un système d'émission, pour contrôler la linéarité d'un amplificateur d'émission en fonction des pertes liées à la réflexion d'une antenne, pour adapter dynamiquement une antenne, etc.

Les principaux paramètres d'un coupleur sont :

les pertes d'insertion, qui représentent la perte de transmission entre les deux ports IN et OUT de la ligne principale (les pertes d'insertion se définissent alors que les deux autres ports CPLD et ISO du coupleur sont chargés par une impédance de 50 $\Omega$) ;

le couplage qui représente la perte de transmission entre les ports IN et CPLD (le couplage se définit alors que les deux ports OUT et ISO sont chargés par une impédance de 50 $\Omega$) ;

l'isolation, qui représente la perte de transmission entre les ports IN et ISO (l'isolation se définit alors que les deux autres ports OUT et CPLD sont chargés par une impédance de 50 $\Omega$) ;

la directivité qui représente la différence de perte en transmission entre les ports ISO et CPLD, depuis le port IN ; et l'adaptation qui représente les pertes en réflexion sur les quatre ports.

Un coupleur idéal présente une directivité infinie, c'est-à-dire qu'aucune puissance n'est présente sur le port de sa ligne secondaire située en regard du port de sortie de sa ligne principale quand un signal circule du port d'entrée vers le port de sortie de cette ligne principale. En pratique, un coupleur est dit directionnel quand sa directivité est suffisante (typiquement supérieure à 20 dBm) pour que les puissances récupérées sur les accès de sa ligne secondaire permettent de distinguer le sens de circulation de la puissance dans la ligne principale. Quand les deux ports de la ligne secondaire du coupleur sont utilisés pour avoir simultanément l'information de puissance, le coupleur est dit bidirectionnel.

De plus en plus, les dispositifs d'émission-réception radiofréquence sont susceptibles de fonctionner dans plusieurs bandes de fréquences. C'est par exemple le cas de la téléphonie mobile où les téléphones mobiles sont passés de bi-bande, à tri-bande, puis à quadri-bande.

La chaîne d'émission-réception comporte alors autant de voies que le dispositif est capable de traiter de bandes de fréquences à la fois en émission et en réception. Chaque voie est associée à un coupleur dimensionné en fonction de la bande de fréquences à traiter. En particulier, les longueurs des lignes principale et secondaire dépendent de cette bande de fréquences. Ce besoin de dimensionnement différent des coupleurs complique la fabrication. De plus, avec des coupleurs de longueur différente, on assiste à des variations de directivité d'un coupleur à l'autre, ce qui n'est pas souhaitable.

Dans un coupleur, si les deux ports de sa ligne secondaire et le port de sortie de sa ligne principale sont parfaitement adaptés, aucune réflexion parasite ne se produit. Une telle adaptation parfaite ne peut malheureusement pas être obtenue en pratique. En particulier, le port sur lequel est prélevée la partie de la puissance par couplage est rarement idéalement adapté. Il en découle que les réflexions parasites engendrent des erreurs sur les informations récupérées.

Un défaut d'adaptation du port de la ligne secondaire du coupleur sur lequel est prélevée l'information peut avoir différentes origines. Le plus souvent, le coupleur est reporté sur un substrat isolant (par exemple, de type circuit imprimé) pour être associé à d'autres circuits. Il n'est alors pas possible de garantir une parfaite adaptation (typiquement 50 $\Omega$) du port de mesure (CPLD). De plus, si les coupleurs ont des tailles différentes, cette adaptation risque de varier d'un coupleur à l'autre.

En outre, dans un coupleur multi-bande, les antennes connectées en sortie des lignes principales introduisent un couplage additionnel. Plus ce couplage est important (moins l'isolation entre les deux antennes est bonne), plus les résultats de mesure sont faussés. Le coupleur n'est alors pas suffisamment sélectif en fréquence d'une voie par rapport à l'autre.

Résumé

Un objet d'un mode de réalisation de la présente invention est de pallier tout ou partie des inconvénients des structures d'émission-réception radiofréquence multi-bande utilisant un coupleur par voie.

Un autre objet d'un mode de réalisation de la présente invention est de réduire l'encombrement d'une structure de couplage multi-bande.

Un autre objet d'un mode de réalisation de la présente invention est d'améliorer la sélectivité en fréquence des voies les unes par rapport aux autres.

Un autre objet d'un mode de réalisation de la présente invention est d'améliorer la fiabilité des mesures en les rendant peu ou insensible à une variation d'adaptation des circuits connectés sur le port de mesure.

Pour atteindre tout ou partie de ces objets ainsi que d'autres, il est prévu un circuit de couplage multi-bande, comportant :

un nombre de voies égal au nombre de bandes de fréquences, chaque voie ayant une première borne et une deuxième borne ;
une troisième borne et une quatrième borne ;
un nombre de coupleurs en lignes distribuées égal au nombre de voies, tous les coupleurs étant identiques et dimensionnés en fonction de la bande de fréquences la plus élevée, et chaque coupleur comportant une première ligne conductrice entre des premier et deuxième ports reliés aux première et deuxième bornes de la voie concernée, et une deuxième ligne conductrice couplée à la première entre des troisième et quatrième ports ;
un premier ensemble d'atténuateurs entre les troisièmes ports des coupleurs et la troisième borne du circuit ; et
un réseau de filtres entre les quatrièmes ports des coupleurs et la quatrième borne du circuit.

Selon un mode de réalisation de la présente invention, le circuit comporte en outre un second ensemble d'atténuateurs associé au réseau de filtres.

Selon un mode de réalisation de la présente invention, ledit réseau comporte, pour chaque voie, un filtre dimensionné pour laisser passer la bande de fréquences de la voie concernée, en série avec un atténuateur.

Selon un mode de réalisation de la présente invention, ledit réseau comporte :

pour chaque voie à l'exception de la dernière, un filtre passe-bas des fréquences de la voie courante et des voies de rang inférieur en série avec un atténuateur, cette association en série étant, pour la première voie, reliée à la quatrième borne du circuit ; et
pour chaque voie à l'exception de la première, un filtre passe-haut des fréquences de la voie courante et des voies de rang supérieur, connecté au filtre passe-bas de la voie de rang inférieur.

Selon un mode de réalisation de la présente invention, les filtres et atténuateurs sont dimensionnés à partir des relations suivantes :

l'isolation $I_i$ dans la bande i est égale à l'isolation $IB_i$ du coupleur de la voie i, majorée de l'atténuation Atti fournie par l'atténuateur de la voie i ;
la directivité dans la bande i correspond au facteur de couplage $CB_i$ du coupleur de la voie i, diminué de l'isolation $I_i$ dans la bande i telle que calculée ci-dessus, et est supérieure ou égale à la directivité minimale DIR souhaitée pour l'ensemble des voies.

Selon un mode de réalisation de la présente invention, les filtres et atténuateurs sont dimensionnés en tenant en outre compte que le couplage d'une antenne connectée au deuxième port du coupleur d'une voie i, dans une bande de fréquences d'une autre voie j, correspond à la somme du couplage $X_{ij}$ entre les antennes connectées aux deuxièmes ports des coupleurs des voies i et j, du facteur de couplage $C_jB_i$ du coupleur de la voie j dans la bande i, de l'atténuation $AF_jB_i$ apportée par le filtre de la voie j dans la bande i et de l'atténuation Attj apportée par l'atténuateur de la voie j, et est inférieur ou égal à l'isolation $I_i$ dans la bande i.

Selon un mode de réalisation de la présente invention, les filtres et atténuateurs sont dimensionnés en tenant en outre compte que le couplage d'une antenne connectée au deuxième port du coupleur d'une voie i, dans une bande de fréquences d'une autre voie j, est inférieur ou égal à l'isolation $I_i$ dans la bande i et correspond :

pour toute voie j de rang inférieur au rang i, à la somme du couplage $X_{ij}$ entre les antennes connectées aux deuxièmes ports des coupleurs des voies i et j, du facteur de couplage $C_jB_i$ du coupleur de la voie j dans la bande i, de l'atténuation $LF_jB_i$ apportée par le filtre passe-bas de la voie j dans la bande i et de l'atténuation Attj apportée par l'atténuateur de la voie j ; et

pour toute voie j de rang supérieur au rang i, à la somme du couplage $X_{ij}$ entre les antennes connectées aux deuxièmes ports des coupleurs des voies i et j, du facteur de couplage $C_jB_i$ du coupleur de la voie j dans la bande i, de la somme des atténuations $LF_jB_i$ apportées par les filtres passe-haut des voies j-1 à i dans la bande i et de l'atténuation Attj apportée par l'atténuateur de la voie j.

Selon un mode de réalisation de la présente invention, le circuit comporte en outre un ensemble de séparateurs résistifs en cascade entre les filtres et la quatrième borne.

Selon un mode de réalisation de la présente invention, une borne du séparateur associé à la dernière voie est connectée à la masse par un élément résistif ayant une valeur triple par rapport à des éléments résistifs respectifs des séparateurs.

Selon un mode de réalisation de la présente invention, les filtres et séparateurs sont dimensionnés à partir des relations suivantes :

l'isolation $I_i$ dans la bande i est égale à l'isolation $IB_i$ du coupleur de la voie i, majorée de la somme des atténuations apportées par les séparateurs entre la première voie et la voie i ;

la directivité dans la bande i correspond au facteur de couplage $CB_i$ du coupleur de la voie i, diminué de l'isolation $I_i$ dans la bande i telle que calculée ci-dessus, et est supérieure ou égale à la directivité minimale DIR souhaitée pour l'ensemble des voies ; et

le couplage d'une antenne connectée au deuxième port du coupleur d'une voie i, dans une bande de fréquences d'une autre voie j correspond à la somme du couplage $X_{ij}$ entre les antennes connectées aux deuxièmes ports des coupleurs des voies i et j, du facteur de couplage $C_jB_i$ du coupleur de la voie j dans la bande i, de l'atténuation $AF_jB_i$ apportée par le filtre de la voie j dans la bande i et de la somme des atténuations apportées par les séparateurs entre la première voie et la voie j, et est inférieur ou égal à l'isolation $I_i$ dans la bande i.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation schématique sous forme de blocs d'une chaîne d'émission radiofréquence du type usuel ;
la figure 2 est un schéma-bloc d'un mode de réalisation d'une chaîne d'émission radiofréquence multi-bande ;
la figure 3 illustre une première solution de circuit de couplage multi-bande ;
la figure 4 représente de façon schématique et sous forme de blocs, un mode de réalisation d'un circuit de couplage multi-bande ;
la figure 5 représente un mode de réalisation d'un coupleur du circuit de la figure 4 ;
la figure 5A représente une variante d'un atténuateur du circuit de la figure 5 ;
la figure 6 détaille un mode de réalisation du circuit de couplage de la figure 4 ;
la figure 7 détaille un autre mode de réalisation du circuit de couplage de la figure 4 ;
la figure 8 représente un mode de réalisation d'un séparateur résistif du circuit de la figure 7 ;
la figure 9 détaille encore un autre mode de réalisation du circuit de couplage de la figure 4 ; et
les figures 10A, 10B, 10C et 10D représentent des exemples de réalisation de filtres.

Description détaillée

De mêmes éléments ont été désignés par de mêmes références aux différentes figures. Par souci de clarté, seuls les éléments utiles à la compréhension de l'invention ont été représentés et seront décrits. En particulier, les circuits amont et aval de la structure de couplage multi-bande n'ont pas été détaillés, l'invention étant compatible avec les circuits usuels.

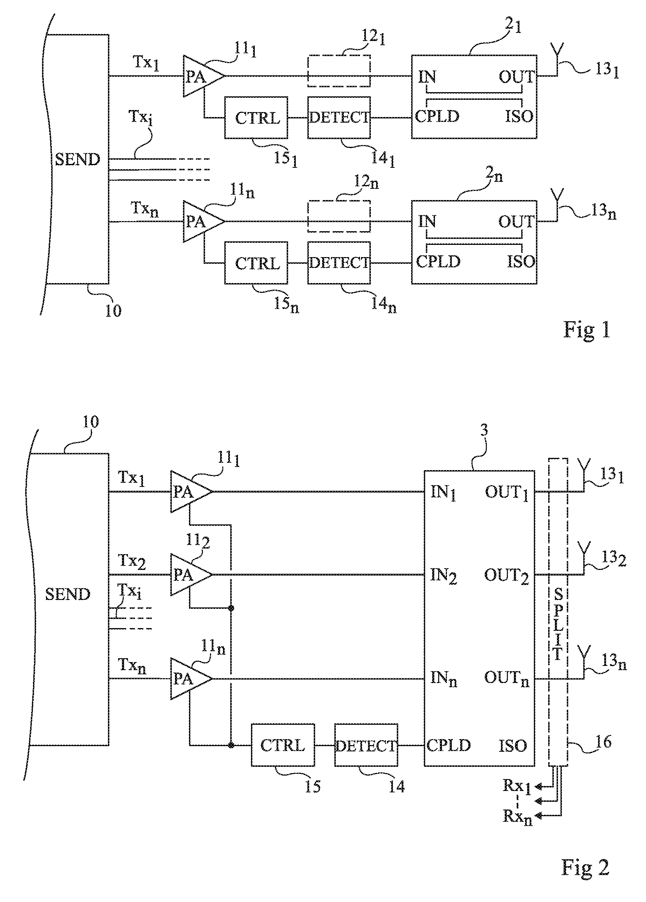

La figure 1 est un schéma bloc d'un exemple usuel de chaîne d'émission susceptible d'émettre dans plusieurs bandes de fréquences. Ce type de circuit équipe par exemple des dispositifs de communication de type téléphonie mobile.

Un circuit électronique 10 d'émission (SEND) est susceptible de générer des signaux $Tx_i$ (i étant compris entre 1 et n) à émettre en fonction de la bande de fréquences utilisée. Ces signaux sont envoyés sur des amplificateurs de puissance $11_i$ (PA) dont les sorties respectives traversent divers circuits de traitement et d'adaptation $12_i$ illustrés en

pointillés. Ces circuits $12_i$ comprennent, entre autres et de façon non limitative, des dispositifs d'adaptation d'impédance à destination d'antennes d'émission $13_i$. Pour être capable d'ajuster la puissance de l'amplificateur $11_i$ ou de tout autre élément (réseau d'adaptation d'impédance ajustable, etc.), un coupleur $2_i$ est intercalé, par exemple, entre la sortie du circuit $12_i$ et l'antenne correspondante. Le cas échéant, des séparateurs de voies (non représentés) sont intercalés entre le coupleur et l'antenne. De tels séparateurs servent à séparer l'émission de la réception qui est traitée par une ligne de réception radiofréquence non représentée.

Chaque coupleur $2_i$ comporte une ligne principale intercalée entre l'amplificateur $11_i$ et l'antenne $13_i$ (ou entre la sortie du circuit $12_i$ et l'antenne $13_i$). Un port ou accès IN, dit d'entrée, est côté amplificateur 11 tandis qu'un port ou accès OUT (parfois également appelé DIR), dit de sortie, est côté antenne $13_i$. Une ligne couplée ou secondaire du coupleur prélève une partie de la puissance de la ligne principale. Un port CPLD du coupleur, correspondant à l'extrémité de la ligne secondaire côté port IN, fournit une information sur la mesure. Cette information dépend, entre autres, des pertes dues à la réflexion de l'antenne. S'agissant d'un coupleur directif, l'extrémité ISO de la ligne secondaire, côté port OUT, n'est pas utilisée. Elle est chargée par une impédance de référence du circuit (typiquement 50 ohms). Dans l'exemple de la figure 1, la mesure, qui fournit une indication des pertes en réflexion engendrées par l'antenne, sert à adapter le gain de l'amplificateur au moyen d'un circuit $14_i$ (DETECT) de détection du niveau sur le port CPLD du coupleur correspondant et d'un circuit $15_i$ (CTRL) recevant l'information mesurée par le détecteur et commandant le gain de l'amplificateur $11_i$ correspondant.

La mesure des pertes en réflexion de l'antenne peut également permettre une adaptation dynamique de l'antenne si celle-ci possède cette fonctionnalité.

Comme indiqué précédemment, la multiplication des circuits de commande et de détection nuit à la miniaturisation des lignes d'émission radiofréquence. De plus, dans la plupart des applications et notamment dans la téléphonie mobile, une seule ligne est utilisée à un instant donné, de sorte qu'il serait souhaitable de pouvoir partager au moins les circuits de commande et de détection.

La figure 2 est un schéma-bloc à rapprocher de celui de la figure 1 illustrant une chaîne d'émission radiofréquence à circuit de couplage multi-bande.

Comme précédemment, un circuit 10 de n voies est susceptible de générer des signaux $Tx_i$ (i compris entre 1 et n) sur différentes bandes de fréquences qui sont envoyés sur des amplificateurs d'émission $11_i$ à gain ajustable. Les sorties respectives des amplificateurs $11_i$ sont envoyées sur n entrées $IN_i$ d'un circuit 3 de couplage multi-bande. Ce circuit comporte autant de sorties $OUT_i$ destinées à être reliées aux antennes $13_i$ affectées aux différentes bandes. Le circuit 3 ne comporte qu'un port CPLD et un port ISO. Le port CPLD est relié à un détecteur 14 dont la sortie est connectée à un circuit de commande 15. La sortie du circuit de commande 15 est reliée aux entrées de commande de gain respectif des amplificateurs $11_i$. Le cas échéant, des circuits de commutation et d'aiguillage des signaux sont intercalés entre le circuit de commande 15 et les entrées de commande de gain des amplificateurs $11_i$.

Dans l'exemple de la figure 2, un séparateur 16 (SPLIT) a été symbolisé en pointillés pour séparer les flux d'émission des flux de réception au niveau des antennes $13_i$ et fournir des signaux $Rx_i$ à une ligne de réception non représentée.

Pour simplifier la description, on identifie par leur rang i (entre 1 et n), les voies, bandes de fréquences et différents constituants du circuit de couplage.

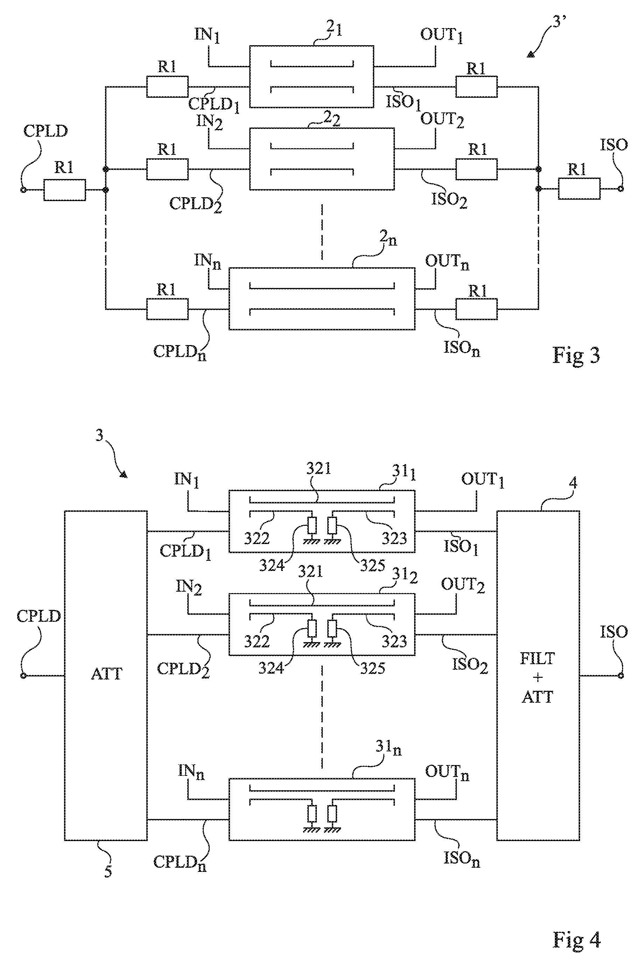

La figure 3 représente un exemple usuel de circuit 3' de couplage multi-bande susceptible d'être utilisé dans la chaîne de la figure 2. Le circuit 3' comporte n coupleurs $2_i$ dont les entrées et sorties respectives des lignes principales définissent les différentes bornes $IN_i$ et $OUT_i$ du circuit 3'. Les bornes $CPLD_i$ et $ISO_i$ des différents coupleurs $2_i$ sont connectées, par l'intermédiaire d'un réseau d'adaptation d'impédance, aux bornes CPLD et ISO du circuit 3'. Typiquement, chaque borne $CPLD_i$ est reliée à la borne CPLD par une association en série de deux résistances R1, une de ces résistances étant partagée par toutes les connexions. La même structure est reproduite côté borne ISO. Toutes les résistances R1 ont la même valeur. Cette valeur est calculée en fonction de l'impédance R souhaitée pour le coupleur (typiquement 50 ohms) et correspond à $R1 = R(n-1)/(n+1)$. Avec de telles valeurs, on obtient une atténuation entre deux ports qui dépend du nombre de bandes.

La figure 4 représente, de façon très schématique et sous forme de blocs, un mode de réalisation d'un circuit de couplage.

Comme dans le circuit de la figure 3, un coupleur $31_i$ en lignes distribuées est affecté à chaque bande de fréquences ou voie. Les coupleurs $31_i$ présentent, par exemple, des longueurs de lignes égales et identiques (en forme, matériau, etc.). Le fait que les longueurs des lignes soient identiques engendre que tous les coupleurs ont la même directivité intrinsèque, donc que le circuit de couplage présente une directivité indépendante de la bande de fréquence. Toutefois, on pourra également prévoir d'individualiser le dimensionnement de chaque coupleur en fonction de la voie concernée.

Chaque port $ISO_i$ est relié à la borne ISO du circuit 3 par un réseau 4 de filtres (FILT) et d'atténuateurs (ATT) ou de filtres et de séparateurs. Côté borne CPLD, chaque port $CPLD_i$ est relié à la borne CPLD du circuit 3 par un réseau 5 d'atténuateurs (ATT).

Le rôle du réseau 4 est, pour chaque voie, de filtrer les signaux hors de sa bande de fréquences, c'est-à-dire susceptibles d'être reçus par les antennes non utilisées dans la transmission.

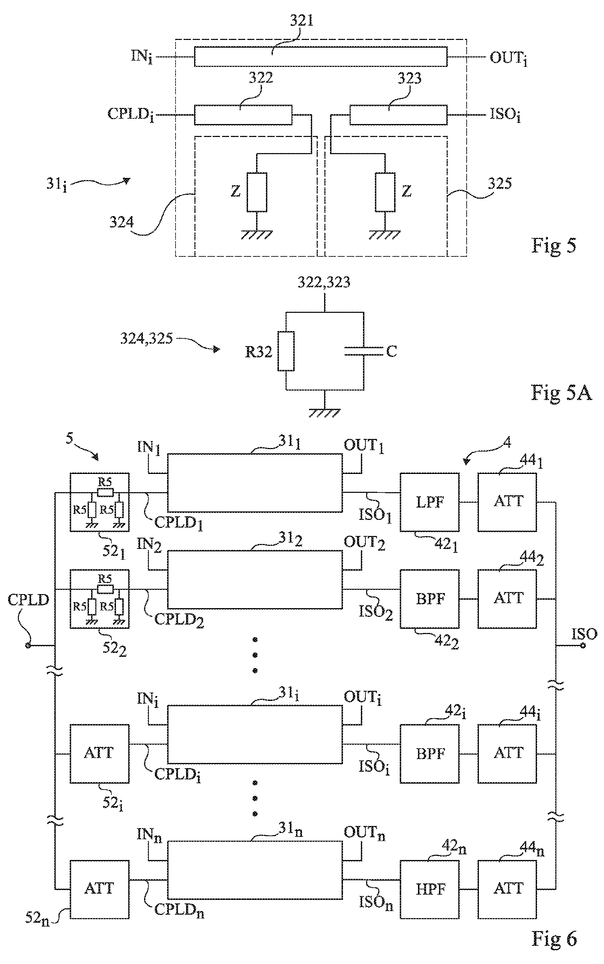

Plusieurs modes de réalisation du réseau de filtres seront décrits en relation avec les figures 6, 7 et 10.

Selon un mode de réalisation simplifié, tous les coupleurs sont identiques au coupleur $2_1$ de la figure 3.

De préférence, les coupleurs $31_i$ ont une structure améliorée en terme de directivité pour éviter de voir apparaître certains dysfonctionnements, par exemple, une erreur de détection qui serait susceptible de se produire si les pertes en réflexion correspondent à une atténuation supérieure à la directivité (signal réfléchi plus atténué que le coefficient de directivité).

La figure 5 représente un mode de réalisation d'un coupleur $31_i$ à directivité améliorée du type de ceux utilisés dans le circuit de la figure 4. Ce coupleur $31_i$ en lignes distribuées comporte une ligne principale 321, destinée à être intercalée sur la ligne de transmission par ses deux ports $IN_i$ et $OUT_i$, respectivement d'entrée et de sortie. Une ligne secondaire, formée de deux tronçons 322 et 323 parallèles à la ligne 321, définit les ports $CPLD_i$ et $ISO_i$ destinés à véhiculer l'information proportionnelle à la puissance transmise dans la ligne 321. Les tronçons 322 et 323 sont, de préférence, symétriques, c'est-à-dire de même longueur. Leurs extrémités respectives externes sont reliées aux ports $CPLD_i$ et $ISO_i$. Leurs extrémités respectives internes sont connectées à des atténuateurs 324 et 325 constituant une impédance Z entre ces extrémités internes et la masse.

Les atténuateurs 324 et 325 sont de préférence choisis pour fournir une atténuation au moins égale à la moitié de la directivité du coupleur. En prenant l'exemple d'un coupleur ayant une directivité de -30 dB, cela signifie que les atténuateurs 324 et 325 sont chacun d'au moins 15 dB. La structure de coupleur représentée en figure 5 permet de s'affranchir de l'influence des charges présentes sur les ports $CPLD_i$ et $ISO_i$.

En pratique, un coupleur $31_i$ est réalisé sous la forme de pistes conductrices portées par un substrat isolant. Le plus souvent, les lignes sont rectilignes et leur longueur est choisie en fonction de la fréquence de fonctionnement du coupleur et du niveau de couplage désiré. Un coupleur tel que décrit en relation avec la figure 5 correspond au coupleur bidirectionnel décrit dans la demande de brevet FR n°2 923 950 (B8533 - 07-TO-295/296) ou dans la demande de brevet US n°2009/0128255.

La figure 5A représente un exemple de réalisation d'atténuateur 324 ou 325.

Cet atténuateur est formé d'une résistance R32 en parallèle avec une capacité C entre l'extrémité interne du tronçon concerné et la masse. Par exemple, la résistance R32 est de 50 ohms et la capacité C est de l'ordre du picofarad.

La figure 6 est un schéma-bloc d'un mode de réalisation du circuit de couplage de la figure 4.

On suppose que le réseau d'atténuateurs 5 comporte un atténuateur 52 par voie. Par exemple, on utilise, pour chaque voie (entre chaque borne $CPLD_i$ et la borne CPLD), un atténuateur en pi constitué de trois éléments résistifs $R_5$ de même valeur. Une première résistance relie la borne $CPLD_i$ à la borne CPLD. Les deux autres résistances relient respectivement les bornes $CPLD_i$ et CPLD à la masse.

Côté borne ISO, le réseau 4 comporte, pour chaque voie i, un filtre $42_i$ et un atténuateur $44_i$. Les atténuateurs sont, par exemple, des atténuateurs en pi, similaires à ceux réalisés côté borne CPLD.

Le filtre $42_i$ de chaque voie est dimensionné pour ne laisser passer que la bande de fréquences de la voie concernée.

Pour simplifier la description, on suppose que les n voies de la figure 6 sont ordonnées dans le sens des fréquences croissantes. Le premier filtre $42_1$ est alors un filtre passe-bas (LPF) ayant une fréquence de coupure choisie pour ne laisser passer que la bande passante de la première voie. Chaque filtre $42_2$ à $42_{n-1}$ est un filtre passe-bande (BPF) dimensionné pour ne laisser passer que la fréquence de la bande correspondante. Le dernier filtre $42_n$ est un filtre passe-haut (HPF) dimensionné pour ne laisser passer que les fréquences de la dernière bande. Bien entendu, les filtres passe-bas $42_1$ et passe-haut $42_n$ pourront être remplacés par des filtres passe-bande laissant passer les fréquences de la bande concernée.

Une telle structure permet que le signal parasite provenant du couplage entre les antennes soit, côté borne ISO, coupé par les filtres.

Le dimensionnement des filtres et des atténuateurs du réseau 4 dépendent des caractéristiques intrinsèques du coupleur $31_i$ et du couplage parasite des antennes entre-elles.

A partir de ces caractéristiques intrinsèques, on connaît (ou on est capable de mesurer) :

$X_{ij}$, le couplage entre les antennes $13_i$ et $13_j$ ;
$CB_i$, le coefficient de couplage total du circuit dans la bande i (différence entre les signaux présents sur les bornes $IN_i$ et CPLD) ;
$C_iB_j$, le couplage du coupleur $31_i$ dans la bande de fréquence j (différence entre les signaux présents sur les bornes $IN_i$ et $CPLD_i$) ;
$IB_i$, l'isolation du coupleur $31_i$ dans la bande i (différence entre les signaux présents sur les bornes $IN_i$ et $ISO_i$) ; et
DIR, la directivité minimale souhaitée pour toutes les bandes.

En notant les caractéristiques des filtres $42_i$ et des atténuateurs $44_i$ de la façon suivante :

$Att_i$, l'atténuation apportée par l'atténuateur $44_i$ ; et
$AF_iB_j$, l'atténuation apportée par le filtre $42_i$ dans la bande j,

on peut exprimer les relations suivantes d'isolation, de directivité et de couplage, obtenus par le circuit 3 de la façon suivante :

l'isolation totale du circuit $I_i$ dans la bande i (différence entre les signaux présents sur les bornes $IN_i$ et ISO) correspond à l'isolation du coupleur de la voie i, majorée de l'atténuation fournie par l'atténuateur $44_i$ ($I_i = IB_i + Att_i$) ;
la directivité dans la bande i correspond au facteur de couplage du coupleur de rang i, diminué de l'isolation dans la bande i telle que calculée ci-dessus - cette directivité doit être supérieure ou égale à la directivité minimale DIR souhaitée pour l'ensemble des voies ($CBi - I_i \geq DIR$) ; et
le couplage de l'antenne de la voie i dans la bande de fréquence de chaque autre voie j correspond à la somme du couplage $X_{ij}$ entre les antennes $13_i$ et $13_j$, du facteur de couplage $C_jB_i$ du coupleur $31_j$ dans la bande i, de l'atténuation $AF_jB_i$ apportée par le filtre $42_j$ de la voie j dans la bande i et de l'atténuation $Att_j$ apportée par l'atténuateur $44_j$. Cette somme ($X_{ij} + C_jB_i + AF_jB_i + Attj$) doit être inférieure ou égale à l'isolation $I_i$ dans la bande i.
Le système d'équations obtenu pour les différentes bandes permet de déterminer les valeurs à donner aux filtres et aux atténuateurs.

Côté réseau 5, l'atténuation est choisie pour assurer le niveau de couplage souhaité dans chaque bande et assurer l'adaptation d'impédance souhaitée entre les différentes bandes.

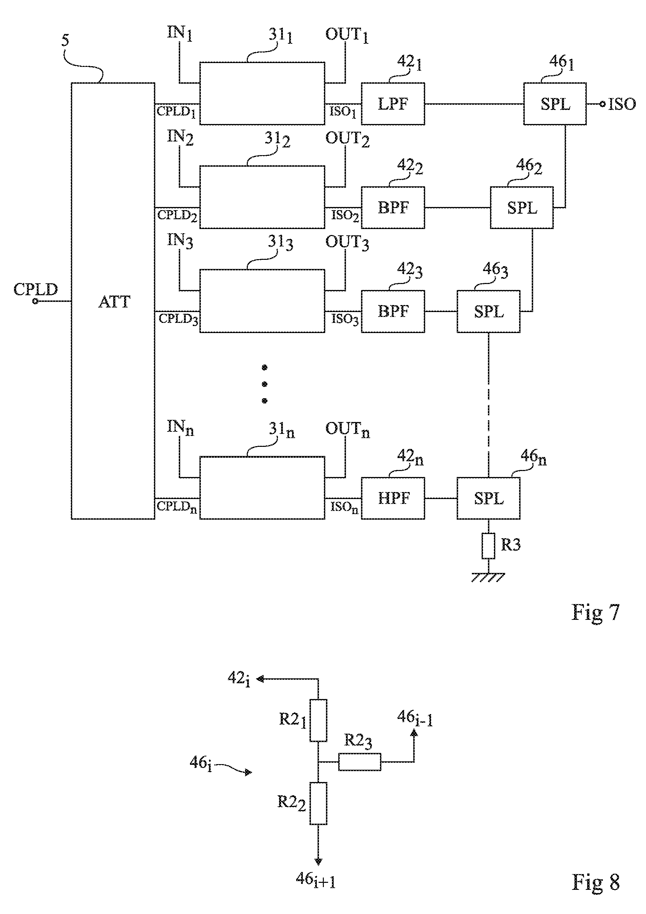

La figure 7 représente le schéma d'un autre mode de réalisation d'un circuit de couplage.

Par rapport au mode de réalisation de la figure 6, les atténuateurs 44 sont remplacés par des séparateurs $46_i$ (SPL - splitter). Les séparateurs 46 sont, par exemple, des séparateurs résistifs comportant, chacun, trois résistances dans une structure en T. Le réseau de filtres 42 n'est pas modifié.

La figure 8 représente un exemple de réalisation d'un séparateur $46_i$.

La borne (dite arbitrairement de sortie) côté borne ISO de chaque filtre $42_i$ est reliée à une extrémité d'une première résistance $R2_1$ du séparateur $46_i$ de la voie concernée. Cette première résistance $R2_1$ est en série avec une deuxième résistance $R2_2$ du même séparateur pour, à l'exception de celle du séparateur $46_n$ de la dernière voie, être connectée à la troisième résistance $R2_3$ du séparateur $46_{i+1}$ de la voie suivante. A l'exception du séparateur $46_1$ de la première voie, le point milieu entre les première $R2_1$ et deuxième $R2_2$ résistances d'un séparateur $46_i$ est donc relié, par la troisième résistance $R2_3$ de ce séparateur, à la deuxième résistance $R2_2$ du séparateur $46_{i-1}$ de la voie précédente.

La troisième résistance $R2_3$ du séparateur $46_1$ de la première voie est reliée à la borne ISO du circuit 3. La deuxième résistance du séparateur $46_n$ de la dernière voie est reliée, par une résistance R3 (figure 7), à la masse.

La valeur de cette résistance R3 correspond au triple des valeurs des résistances R2. Les séparateurs résistifs $46_i$ ainsi réalisés sont en cascade entre les différentes voies.

Fonctionnellement, chaque coupleur $31_i$ voit, sur son port $ISO_i$, une résistance de valeur R3 et la borne ISO du circuit 3 voit également une résistance de valeur R3.

Le dimensionnement d'un circuit de couplage tel qu'illustré en figure 7 s'effectue par exemple de la façon suivante.

En reprenant les notations exposées en relation avec la figure 6, et en notant $Spl_i$ l'atténuation apportée par le séparateur $46_i$ de rang i, on obtient les relations suivantes :

$$I_i = IB_i + Spl_1 + ... + Spl_i ;$$

$$CB_i - I_i \geq DIR ;$$

et
pour tout j différent de i :

$$X_{ij} + C_jB_i + AF_jB_i + Spl_1 + ... + Spl_j \leq I_i.$$

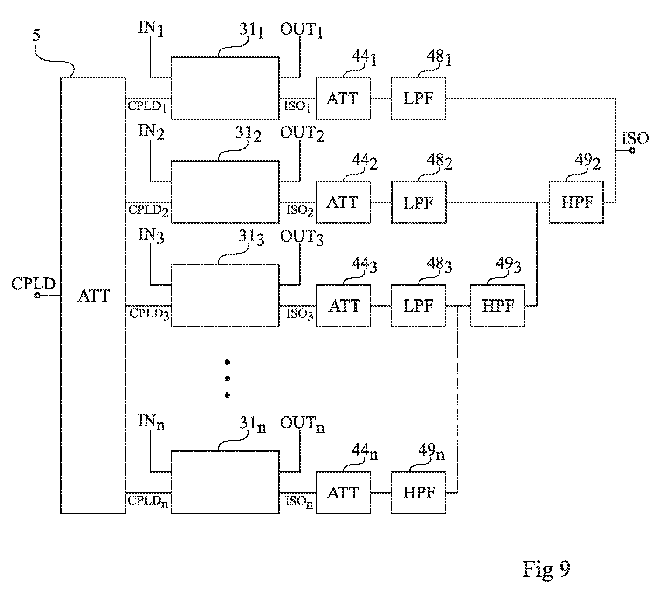

La figure 9 représente encore un autre mode de réalisation d'un circuit de couplage.

Par rapport au mode de réalisation de la figure 6, les atténuateurs sont placés côté bornes $ISO_i$ et non côté borne ISO. De plus, les filtres sont cascadés au niveau des différentes voies. Chaque voie, à l'exception de la dernière n comporte, en série avec son atténuateur $44_i$, un filtre passe-bas $48_i$ (i allant de 1 à n-1) filtrant toutes les fréquences supérieures à la bande de fréquences de la voie courante i. De plus, chaque voie, à l'exception de la première, est reliée en sortie du filtre passe-bas $48_{i-1}$ de la voie précédente par un filtre passe-haut $49_i$ coupant toutes les fréquences inférieures à la bande de fréquences de la voie courante. La borne ISO est reliée aux sorties des filtres $48_1$ et $49_2$.

Un tel mode de réalisation permet de réaliser des filtres plus simples, un filtre passe-bande étant généralement en pratique un filtre passe-bas associé à un filtre passe-haut.

Pour des raisons de sélectivité, les filtres passe-bas et passe-haut sont au moins d'ordre 2 et, de préférence d'ordre 3.

En reprenant les notations exposées en relation avec la figure 6, et en notant $LF_iB_j$, l'atténuation apportée par le filtre $48_i$ dans la bande j et $HF_iB_j$, l'atténuation apportée par le filtre $49_i$ dans la bande j, on obtient les relations suivantes :

$$I_i = IB_i + Att_i \ ;$$

$$CB_i - I_i \geq DIR \ ;$$

pour tout j inférieur à i :

$$X_{ij} + C_jB_i + Att_j + LF_jB_i \leq I_i \ ;$$

et
pour tout j supérieur à i :

$$X_{ij} + C_jB_i + Att_j + HF_{j-1}B_i + \ldots + HF_iB_i \leq I_i.$$

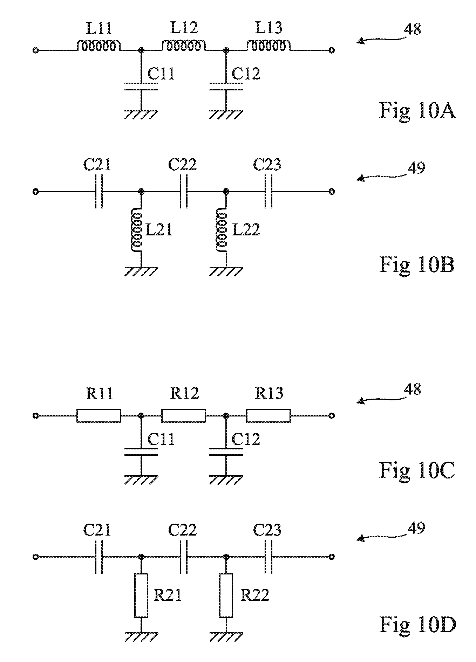

Les figures 10A à 10D représentent des exemples de filtres passe-bas et passe-haut réalisables dans le réseau 4.

La figure 10A représente un exemple de filtre passe-bas 48 d'ordre 3. Trois inductances L11, L12 et L13 sont en série et les points milieu de cette association en série sont directement reliés à la masse par des condensateurs, respectivement C11 et C12.

La figure 10B représente un exemple de filtre passe-haut 49 d'ordre 3. Trois condensateurs C21, C22 et C23 sont en série et les points milieu de cette association en série sont directement reliés à la masse par des inductances, respectivement L21 et L22.

Les figures 10C et 10D représentent d'autres exemples de filtres respectivement passe-bas 48 et passe-haut 49. Par rapport aux figures 10A et 10B, les inductances L11, L12, L13, L21 et L22 sont remplacées par des résistances, respectivement R11, R12, R13, R21 et R22.

Le choix entre une réalisation à partir d'éléments inductifs ou résistifs dépend, par exemple, de la technologie disponible et, notamment, de la possibilité d'intégrer facilement des éléments inductifs dans cette technologie. La réalisation, sous forme intégrée, de dispositifs résistifs et capacitifs est généralement plus facile.

Divers modes de réalisation ont été décrits, diverses variantes et modifications apparaîtront à l'homme de l'art. En particulier, les dimensions à donner aux différents composants du circuit de couplage décrit sont à la portée de l'homme du métier à partir des indications fonctionnelles données ci-dessus et des caractéristiques intrinsèques des différents coupleurs utilisés. De plus, bien que l'invention ait été décrite en faisant plus particulièrement référence à une chaîne d'émission, elle s'applique également à un circuit de couplage multi-bande pour une chaîne de réception.

**Revendications**

**1.** Circuit (3) de couplage multi-bande, comportant :

un nombre (n) de voies égal au nombre de bandes de fréquences, chaque voie ayant une première borne ($IN_i$) et une deuxième borne ($OUT_i$) ;

une troisième borne (CPLD) et une quatrième borne (ISO) ;
**caractérisé en ce qu'**il comporte:

un nombre (n) de coupleurs ($31_i$) en lignes distribuées égal au nombre de voies, tous les coupleurs étant identiques et dimensionnés en fonction de la bande de fréquences la plus élevée, et chaque coupleur comportant une première ligne conductrice (321) entre des premier et deuxième ports ($IN_i$, $OUT_i$) reliés aux première et deuxième bornes de la voie concernée, et une deuxième ligne conductrice (322, 323) couplée à la première entre des troisième et quatrième ports ($CPLD_i$, $ISO_i$) ;

un premier ensemble d'atténuateurs (5) entre les troisièmes ports ($CPLD_i$) des coupleurs et la troisième borne du circuit ; et

un réseau (4) de filtres ($42_i$ ; $48_i$, $49_i$) entre les quatrièmes ports ($ISO_i$) des coupleurs et la quatrième borne du circuit, ledit réseau étant adapté à, pour chaque voie, filtrer les signaux hors de la bande de fréquences de la voie concernée.

2. Circuit selon la revendication 1, comportant en outre un second ensemble d'atténuateurs ($44_i$) associé au réseau de filtres ($42_i$ ; $48_i$, $49_i$).

3. Circuit selon la revendication 2, dans lequel ledit réseau (4) comporte, pour chaque voie (i), un filtre ($42_i$) dimensionné pour laisser passer la bande de fréquences de la voie concernée, en série avec un atténuateur ($44_i$).

4. Circuit selon la revendication 2, dans lequel ledit réseau (4) comporte :

pour chaque voie à l'exception de la dernière, un filtre passe-bas ($48_i$) des fréquences de la voie courante et des voies de rang inférieur en série avec un atténuateur ($44_i$), cette association en série étant, pour la première voie, reliée à la quatrième borne (ISO) du circuit ; et

pour chaque voie à l'exception de la première, un filtre passe-haut ($49_i$) des fréquences de la voie courante et des voies de rang supérieur, connecté au filtre passe-bas de la voie de rang inférieur.

5. Circuit selon l'une quelconque des revendications 2 à 4, dans lequel les filtres ($42_i$) et atténuateurs ($44_i$) sont dimensionnés à partir des relations suivantes :

l'isolation $I_i$ dans la bande i est égale ($I_i = IB_i + Atti$) à l'isolation $IB_i$ du coupleur de la voie i, majorée de l'atténuation Atti fournie par l'atténuateur ($44_i$) de la voie i ;

la directivité dans la bande i correspond au facteur de couplage $CB_i$ du coupleur de la voie i, diminué de l'isolation $I_i$ dans la bande i telle que calculée ci-dessus, et est supérieure ou égale ($CBi - I_i \geq DIR$) à la directivité minimale DIR souhaitée pour l'ensemble des voies.

6. Circuit selon la revendication 5, dans son rattachement à la revendication 3, dans lequel les filtres ($42_i$) et atténuateurs ($44_i$) sont dimensionnés en tenant en outre compte que le couplage d'une antenne connectée au deuxième port du coupleur d'une voie i, dans une bande de fréquences d'une autre voie j, correspond à la somme ($X_{ij} + C_jB_i + AF_jB_i + Att_j$) du couplage $X_{ij}$ entre les antennes connectées aux deuxièmes ports des coupleurs des voies i et j, du facteur de couplage $C_jB_i$ du coupleur ($31_j$) de la voie j dans la bande i, de l'atténuation $AF_jB_i$ apportée par le filtre ($42_j$) de la voie j dans la bande i et de l'atténuation Attj apportée par l'atténuateur ($44_j$) de la voie j, et est inférieur ou égal à l'isolation $I_i$ dans la bande i.

7. Circuit selon la revendication 5, dans son rattachement à la revendication 4, dans lequel les filtres ($42_i$) et atténuateurs ($44_i$) sont dimensionnés en tenant en outre compte que le couplage d'une antenne connectée au deuxième port du coupleur d'une voie i, dans une bande de fréquences d'une autre voie j, est inférieur ou égal à l'isolation $I_i$ dans la bande i et correspond :

pour toute voie j de rang inférieur au rang i, à la somme ($X_{ij} + C_jB_i + Att_j + LF_jB_i$) du couplage $X_{ij}$ entre les antennes connectées aux deuxièmes ports des coupleurs des voies i et j, du facteur de couplage $C_jB_i$ du coupleur ($31_j$) de la voie j dans la bande i, de l'atténuation $LF_jB_i$ apportée par le filtre passe-bas ($48_j$) de la voie j dans la bande i et de l'atténuation Attj apportée par l'atténuateur ($44_j$) de la voie j ; et

pour toute voie j de rang supérieur au rang i, à la somme ($X_{ij} + C_jB_i + Att_j + HF_{j-1}B_i + ... + HF_jB_i$) du couplage $X_{ij}$ entre les antennes connectées aux deuxièmes ports des coupleurs des voies i et j, du facteur de couplage $C_jB_i$ du coupleur ($31_j$) de la voie j dans la bande i, de la somme des atténuations $LF_jB_i$ apportées par les filtres passe-haut ($49_j$) des voies j-1 à i dans la bande i et de l'atténuation Attj apportée par l'atténuateur ($44_j$) de la voie j.

8. Circuit selon la revendication 1, comportant en outre un ensemble de séparateurs résistifs ($46_i$) en cascade entre les filtres ($42_i$) et la quatrième borne (ISO).

9. Circuit selon la revendication 8, dans lequel une borne du séparateur ($46_n$) associé à la dernière voie (n) est connectée à la masse par un élément résistif (R3) ayant une valeur triple par rapport à des éléments résistifs (R2) respectifs des séparateurs ($46_i$).

10. Circuit selon la revendication 8 ou 9, dans lequel les filtres ($42_i$) et séparateurs ($46_i$) sont dimensionnés à partir des relations suivantes :

l'isolation $I_i$ dans la bande i est égale ($I_i = IB_i + Spl_1 + ... + Spli$) à l'isolation $IB_i$ du coupleur ($31_i$) de la voie i, majorée de la somme des atténuations apportées par les séparateurs ($46_i$) entre la première voie et la voie i ; la directivité dans la bande i correspond au facteur de couplage $CB_i$ du coupleur de la voie i, diminué de l'isolation $I_i$ dans la bande i telle que calculée ci-dessus, et est supérieure ou égale ($CB_i - I_i \geq DIR$) à la directivité minimale DIR souhaitée pour l'ensemble des voies ; et le couplage d'une antenne connectée au deuxième port du coupleur ($31_i$) d'une voie i, dans une bande de fréquences d'une autre voie j correspond à la somme ($X_{ij} + C_jB_i + AF_jB_i + Spl_1 +...+ Spl_j$) du couplage $X_{ij}$ entre les antennes connectées aux deuxièmes ports des coupleurs des voies i et j, du facteur de couplage $C_jB_i$ du coupleur ($31_j$) de la voie j dans la bande i, de l'atténuation $AF_jB_i$ apportée par le filtre ($42_j$) de la voie j dans la bande i et de la somme des atténuations apportées par les séparateurs entre la première voie et la voie j, et est inférieur ou égal à l'isolation $I_i$ dans la bande i.

**Patentansprüche**

1. Eine Mehrband- bzw. Multiband-Kopplungsschaltung (3), die Folgendes aufweist:

eine Anzahl (n) von Pfaden gleich der Anzahl von Frequenzbändern, wobei jeder Pfad einen ersten Anschluss ($IN_i$) und einen zweiten Anschluss ($OUT_i$) hat; einen dritten Anschluss (CPLD) und einen vierten Anschluss (ISO); **dadurch gekennzeichnet, dass** sie Folgendes aufweist:

eine Anzahl (n) von verteilten Kopplungselementen ($31_i$) gleich der Anzahl von Pfaden, wobei alle Kopplungselemente identisch und gemäß dem höchsten Frequenzband bemessen sind, und wobei jedes Kopplungselement eine erste leitende Leitung (321) zwischen ersten und zweiten Anschlusspunkten bzw. Ports ($IN_i$, $OUT_i$), die mit den ersten und zweiten Anschlüssen des betroffenen Pfades verbunden sind, und eine zweite leitende Leitung (322, 323), die zwischen den dritten und vierten Anschlusspunkten bzw. Ports ($CPLD_i$, $ISO_i$) an die erste gekoppelt ist, aufweist; einen ersten Satz von Dämpfungselementen (5) zwischen den dritten Ports ($CPLD_i$) der Kopplungselemente und dem dritten Anschluss der Schaltung; und eine Anordnung (4) von Filtern ($42_i$; $48_i$, $49_i$) zwischen den vierten Ports ($ISO_i$) der Kopplungselemente und dem vierten Anschluss der Schaltung, wobei die Anordnung ausgelegt ist zum Filtern, für jeden Pfad, von Signalen, die außerhalb des betroffenen Frequenzbandes sind.

2. Schaltung nach Anspruch 1, die weiter einen zweiten Satz von Dämpfungselementen ($44_i$) aufweist, der mit der Filteranordnung ($42_i$; $48_i$, $49_i$) assoziiert ist.

3. Schaltung nach Anspruch 2, wobei die Anordnung (4) für jeden Pfad (i) ein Filter ($42_i$) aufweist, das bemessen ist, um das Frequenzband des betroffenen Pfades durchzulassen, und zwar in Reihe mit einem Dämpfungselement ($44_i$).

4. Schaltung nach Anspruch 2, wobei die Anordnung (4) Folgendes aufweist:

für jeden Pfad, außer für den letzten, ein Tiefpassfilter ($48_i$) für die Frequenzen des aktuellen Pfades und die Pfade eines niedrigeren Rangs, in Reihe mit einem Dämpfungselement ($44_i$), wobei diese Reihenassoziation für den ersten Pfad mit dem vierten Anschluss (ISO) der Schaltung verbunden ist; und für jeden Pfad, außer für den ersten, ein Hochpassfilter ($49_i$) für die Frequenzen des aktuellen Pfades und die Pfade eines höheren Rangs, das mit dem Tiefpassfilter des Pfades eines niedrigeren Rangs verbunden ist.

5. Schaltung nach einem der Ansprüche 2 bis 4, wobei die Filter ($42_i$) und die Dämpfungselemente ($44_i$) basierend auf den folgenden Beziehungen bemessen sind:

eine Isolation $I_i$ in Band i ist gleich ($I_i = IB_i + Atti$) zu einer Isolation $IB_i$ des Kopplungselementes von Pfad i, plus Dämpfung Atti, die durch das Dämpfungselement ($44_i$) des Pfades i vorgesehen wird;
die Richtcharakteristik in Band i entspricht einem Kopplungsfaktor $CB_i$ des Kopplungselementes von Pfad i, minus der Isolation $I_i$ in Band i, wie sie oben berechnet wurde, und ist größer als oder gleich ($CB_i - I_i \geq DIR$) der minimalen Richtcharakteristik DIR, die für alle Pfade erwünscht ist.

6. Schaltung nach Anspruch 5, wenn abhängig von Anspruch 3, wobei die Filter ($42_i$) und die Dämpfungselemente ($44_i$) bemessen sind, indem sie weiter die Tatsache berücksichtigen, dass die Kopplung einer Antenne, die an den zweiten Port des Kopplungselementes eines Pfades i gekoppelt ist, und zwar in einem Frequenzband eines weiteren Pfades j, der Summe ($X_{ij} + C_jB_i + AF_jB_i + Att_j$) der Kopplung $X_{ij}$ zwischen den Antennen, die mit den zweiten Ports der Kopplungselemente der Pfade i und j verbunden sind, des Kopplungsfaktors $C_jB_i$ des Kopplungselementes ($31_j$) aus Pfad j in Band i, der Dämpfung $AF_jB_i$, die durch die Filter ($42_j$) des Pfades j in Band i eingeführt wird, und der Dämpfung $Att_j$, die durch das Dämpfungselement ($44_j$) aus Pfad j eingeführt wird, entspricht und kleiner als oder gleich der Isolation $I_i$ in Band i ist.

7. Schaltung nach Anspruch 5, wenn abhängig von Anspruch 4, wobei die Filter ($42_i$) und die Dämpfungselemente ($44_i$) bemessen sind, indem sie weiter die Tatsache berücksichtigen, dass die Kopplung einer Antenne, die an den zweiten Port des Kopplungselementes eines Pfades i gekoppelt ist, und zwar in einem Frequenzband eines weiteren Pfades j, kleiner als oder gleich der Isolation $I_i$ in Band i ist und Folgendem entspricht:

für jeden Pfad j eines kleineren Rangs als Rang i, der Summe ($X_{ij} + C_jB_i + Att_j + LF_jB_i$) der Kopplung $X_{ij}$ zwischen den Antennen, die mit den zweiten Ports der Kopplungselemente der Pfade i und j verbunden sind, des Kopplungsfaktors $C_jB_i$ des Kopplungselementes ($31_j$) aus Pfad j in Band i, der Dämpfung $LF_jB_i$, die durch das Tiefpassfilter ($48_j$) des Pfades j in Band i eingeführt wird, und der Dämpfung $Att_j$, die durch das Dämpfungselement ($44_j$) aus Pfad j eingeführt wird; und
für jeden Pfad j eines größeren Rangs als Rang i, der Summe ($X_{ij} + C_jB_i + Att_j + HF_{j-1}B_i + ... + HF_iB_i$) der Kopplung $X_{ij}$ zwischen den Antennen, die mit den zweiten Ports der Kopplungselemente der Pfade i und j verbunden sind, des Kopplungsfaktors $C_jB_i$ des Kopplungselementes ($31_j$) aus Pfad j in Band i, der Summe der Dämpfungen $LF_jB_i$, die durch das Hochpassfilter ($49_j$) der Pfade j-1 bis i in Band i eingeführt wird, und der Dämpfung $Att_j$, die durch das Dämpfungselement ($44_j$) aus Pfad j eingeführt wird.

8. Schaltung nach Anspruch 1, die weiter einen Satz von Widerstands-Splittern ($46_i$) in einer Kaskade zwischen den Filtern ($42_i$) und dem vierten Anschluss (ISO) aufweist.

9. Schaltung nach Anspruch 8, wobei ein Anschluss des Splitters ($46_n$), der mit dem letzten Pfad (n) assoziiert ist, durch ein resistives Element (R3) mit einem Wert, der das Dreifache des entsprechenden Widerstandelementes (R2) des Splitters ($46_i$) ist, geerdet ist.

10. Schaltung nach Anspruch 8 oder 9, wobei die Filter ($42_i$) und Splitter ($46_i$) basierend auf den folgenden Beziehungen bemessen sind:

eine Isolation $I_i$ in Band i ist gleich ($I_i = IB_i + Spl_1 + ... + Spl_i$) zu einer Isolation $IB_i$ des Kopplungselementes ($31_i$) von Pfad i, plus der Summe der Dämpfungen, die durch die Splitter ($46_i$) zwischen dem ersten Pfad und Pfad i vorgesehen wird;
die Richtcharakteristik in Band i entspricht einem Kopplungsfaktor $CB_i$ des Kopplungselementes von Pfad i, minus der Isolation $I_i$ in Band i, wie sie oben berechnet wurde, und ist größer als oder gleich ($CB_i - I_i \geq DIR$) der minimalen Richtcharakteristik DIR, die für alle Pfade erwünscht ist;
die Koppelung einer Antenne, die mit dem zweiten Port des Kopplungselementes ($31_i$) eines Pfades i verbunden ist, und zwar in einem Frequenzband eines weiteren Pfades j, entspricht der Summe ($X_{ij} + C_jB_i + AF_jB_i + Spl_1 + ... + Spl_j$) der Kopplung $X_{ij}$ zwischen den Antennen, die mit den zweiten Ports der Kopplungselemente der Pfade i und j verbunden sind, des Kopplungsfaktors $C_jB_i$ des Kopplungselementes ($31_j$) aus Pfad j in Band i, der Summe der Dämpfung $AF_jB_i$, die durch das Filter ($42_j$) aus Pfad j in Band i eingeführt wird, und der Summe der Dämpfung, die durch die Trennelemente zwischen dem ersten Pfad und Pfad j vorgesehen wird, und ist kleiner als oder gleich der Isolation $I_i$ in Band i.

**Claims**

1. A multiband coupling circuit (3) comprising:

   a number (n) of paths equal to the number of frequency bands, each path having a first terminal ($IN_i$) and a second terminal ($OUT_i$) ;
   a third terminal (CPLD) and a fourth terminal (ISO);
   **characterized in that** it comprises:

   a number (n) of distributed couplers ($31_i$) equal to the number of paths, all couplers being identical and sized according to the highest frequency band, and each coupler comprising a first conductive line (321) between first and second ports ($IN_i$, $OUT_i$) connected to the first and second terminals of the concerned path, and a second conductive line (322, 323) coupled to the first one between third and fourth ports ($CPLD_i$, $ISO_i$);
   a first set of attenuators (5) between the third ports ($CPLD_i$) of the couplers and the third terminal of the circuit; and
   an array (4) of filters ($42_i$; $48_i$, $49_i$) between the fourth ports ($ISO_i$) of the couplers and the fourth terminal of the circuit, said array being adapted to, for each path, filtering signals which are outside from the concerned frequency band.

2. The circuit of claim 1, further comprising a second set of attenuators ($44_i$) associated with the filter array ($42_i$; $48_i$, $49_i$).

3. The circuit of claim 2, wherein said array (4) comprises, for each path (i), a filter ($42_i$) sized to let through the frequency band of the concerned path, in series with an attenuator ($44_i$).

4. The circuit of claim 2, wherein said array (4) comprises:

   for each path except for the last one, a low-pass filter ($48_i$) for the frequencies of the current path and of the paths of lower rank in series with an attenuator ($44_i$), this series association being, for the first path, connected to the fourth terminal (ISO) of the circuit; and
   for each path except for the first one, a high-pass filter ($49_i$) for the frequencies of the current path and of the paths of higher rank, connected to the low-pass filter of the path of lower rank.

5. The circuit of any of claims 2 to 4, wherein the filters ($42_i$) and attenuators ($44_i$) are sized based on the following relations:

   isolation $I_i$ in band i is equal ($I_i = IB_i + Atti$) to isolation $IB_i$ of the coupler of path i, plus attenuation Atti provided by the attenuator ($44_i$) of path i;
   the directivity in band i corresponds to coupling factor $CB_i$ of the coupler of path i, minus isolation $I_i$ in band i such as calculated hereabove, and is greater than or equal ($CBi - I_i \geq DIR$) to the minimum directivity DIR desired for all the paths.

6. The circuit of claim 5 as attached to claim 3, wherein the filters ($42_i$) and attenuators ($44_i$) are sized by further taking into account the fact that the coupling of an antenna coupled to the second port of the coupler of a path i, in a frequency band of another path j, corresponds to the sum ($X_{ij} + C_jB_i + AF_jB_i + Attj$) of coupling $X_{ij}$ between the antennas connected to the second ports of the couplers of paths i and j, of coupling factor $C_jB_i$ of the coupler ($31_j$) of path j in band i, of attenuation $AF_jB_i$ introduced by the filter ($42_j$) of path j in band i, and of attenuation Attj introduced by the attenuator ($44_j$) of path j, and is smaller than or equal to isolation $I_i$ in band i.

7. The circuit of claim 5 as attached to claim 4, wherein the filters ($42_i$) and attenuators ($44_i$) are sized by further taking into account the fact that that the coupling of an antenna coupled to the second port of the coupler of a path i, in a frequency band of another path j, is smaller than or equal to isolation $I_i$ in band i and corresponds:

   for any path j of smaller rank than rank i, to the sum ($X_{ij} + C_jB_i + Attj + LF_jB_i$) of coupling $X_{ij}$ between the antennas connected to the second ports of the couplers of paths i and j, of coupling factor $C_jB_i$ of the coupler ($31_j$) of path j in band i, of attenuation $LF_jB_i$ introduced by the low-pass filter ($48_j$) of path j in band i, and of attenuation Attj introduced by the attenuator ($44_j$) of path j; and
   for any path j of rank greater than rank i, to the sum ($X_{ij} + C_jB_i + Attj + HF_{j-1}B_i +... + HF_iB_i$) of coupling $X_{ij}$ between

the antennas connected to the second ports of the couplers of paths i and j, of coupling factor $C_jB_i$ of the coupler ($31_j$) of path j in band i, of the sum of attenuations $LF_jB_i$ introduced by the high-pass filters ($49_j$) of paths j-1 to i in band i, and of attenuation Attj introduced by the attenuator ($44_j$) of path j.

**8.** The circuit of claim 1, further comprising a set of resistive splitters ($46_i$) in cascade between the filters ($42_i$) and the fourth terminal (ISO).

**9.** The circuit of claim 8, wherein a terminal of the splitter ($46_n$) associated with the last path (n) is grounded by a resistive element (R3) having a value which is triple that of respective resistive elements (R2) of the splitters ($46_i$).

**10.** The circuit of claim 8 or 9, wherein the filters ($42_i$) and splitters ($46_i$) are sized based on the following relations:

isolation $I_i$ in band i is equal ($I_i$ = $IB_i$ + $Spl_1$ + ... + Spli) to isolation $IB_i$ of the coupler ($31_i$) of path i, plus the sum of the attenuations provided by the splitters ($46_i$) between the first path and path i;
the directivity in band i corresponds to coupling factor $CB_i$ of the coupler of path i, minus isolation $I_i$ in band i such as calculated hereabove, and is greater than or equal ($CBi - I_i \geq DIR$) to the minimum directivity DIR desired for all the paths;
the coupling of an antenna connected to the second port of the coupler ($31_i$) of a path i, in a frequency band of another path j, corresponds to the sum ($X_{ij}$ + $C_jB_i$ + $AF_jB_i$ + $Spl_1$ +...+ $Spl_j$) of coupling $X_{ij}$ between the antennas connected to the second ports of the couplers of paths i and j, of coupling factor $C_jB_i$ of the coupler ($31_j$) of path j in band i, of attenuation $AF_jB_i$ provided by the filter ($42_j$) of path j in band i, and of the sum of the attenuations provided by the separators between the first path and path j, and is smaller than or equal to isolation $I_i$ in band i.

Fig 1

Fig 2

Fig 3

Fig 4

Fig 5

Fig 5A

Fig 6

Fig 7

Fig 8

Fig 9

Fig 10A

Fig 10B

Fig 10C

Fig 10D

**EP 2 432 129 B1**

## RÉFÉRENCES CITÉES DANS LA DESCRIPTION

**Documents brevets cités dans la description**

- FR 2923950

- US 20090128255 A